# EUROPEAN PATENT SPECIFICATION

(11) **EP 3 923 008 B1**
(45) Date of publication and mention of the grant of the patent: **26.07.2023**
(21) Application number: 20178960.9
(22) Date of filing: 09.06.2020
(51) Int. Cl.: G01R 31/396, G01R 31/3842

(54) **METHOD AND APPARATUS FOR MEASURING THE ELECTRIC CURRENT OF A BATTERY SYSTEM**
VERFAHREN UND VORRICHTUNG ZUR MESSUNG DES ELEKTRISCHEN STROMS EINES BATTERIESYSTEMS
PROCÉDÉ ET APPAREIL DE MESURE DU COURANT D'UN SYSTÈME DE BATTERIE

(43) Date of publication of application: 15.12.2021
(73) Proprietor: Samsung SDI Co., Ltd., Gyeonggi-do 17084 (KR)
(72) Inventor: Hofer, Maximilian, 8230 Hartberg (AT); Renato, Mandic, 8010 Graz (AT); Trathnigg, Thomas, 8010 Graz (AT); Fritz, Jürgen, 8020 Graz (AT)
(74) Representative: Gulde & Partner

(56) References cited:
- EP-A2- 0 388 523
- US-A1- 2008 094 034
- US-A1- 2017 328 940
- US-A1- 2018 188 326

## Description

### Field of the Invention

The present invention relates to an electric current measuring arrangement for a battery system and a method of measuring electric current of a battery system. Further, a corresponding battery system and an electric vehicle is disclosed.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode arrangement including a positive electrode, a negative electrode, and a separator interposed between the positive and negative electrodes, a case receiving the electrode arrangement, and an electrode terminal electrically connected to the electrode arrangement. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating and/or balancing it.

In battery systems according to the state of the art, a battery disconnect unit electronic, generalized a control unit, uses two measuring channels including one Hall sensor and one shunt resistor for current measurement. Due to the two measuring paths a certain level of safety can be provided.

However, a Hall sensor is expensive and the magnetic fields from other bus bars may influence the measurement result. Therefore, an expansive shield for magnetic fields is required.

In a typical battery system three different control components are used in such HV system: a battery system manager which comprises a main control unit in the battery system and controls the relay. The mentioned battery disconnect unit electronic, BDUe, has the function of providing a current measurement. The battery module manager BMM has the function of cell voltage measurement and cell temperature measurement.

Typically, for the current measurement, the current is measured by said shunt sensor and a Hall sensor. For these two sensors two physical interfaces are used including a CAN interface for the shunt sensor and an analog interface for the Hall sensor to transmit the measuring signals.

Problem of such a system is that due to an ASIL level, decomposition of shunt resistor (ASIL A(C)) and Hall sensor (ASIL B(C)) an ASIL A software is required on the microcontroller of the BDUe, which is a challenging task for the operating system. ASIL stands for automotive safety integrity level defined according to ISO 26262.

The microcontroller of the battery system manager usually has the needed ASIL level to process the needed signals in ASIL C or D quality, which is required by customers. Bottleneck is hereby the microcontroller of the BDUe. Due to the fact, that this is identified as an ASIL A path, ASIL A is required on the microcontroller.

The problems to be solved are thus to reduce costs, provide ASIL A on the microcontroller of the BDUe, reduce sensitivity to magnetic fields, reducing the effort in wiring harness, providing a smarter, simpler approach with less complexity involved.

A further implementation of the state of the art is to use a test pattern or test pattern signal. The measurement path is verified by additional patterns on the shunt resistor. Due to the fact that two measuring channels are going through the microcontroller, the microcontroller has to fulfill the required ASIL level, which is usually ASIL C. Therefore, this state of the art variant increases serial costs and development effort.

The US 2018/0188326 A1 discloses an apparatus and method of diagnosing a failure of a switch element used to switch on or off external connection of a battery. The apparatus comprises a diagnosis resistor and a diagnosis switch to connect an outer node of the switch element and an outer node of the current measuring unit. A controller is configured to apply a control signal for turning on or off the switch element to turn on the diagnosis switch after the control signal is applied and then receive a measured current value from the current measuring unit to determine a level of the current flowing through the second line, by using the measured current value, and to diagnose a failure of the switch element by comparing the current level to a reference current level. A diagnosis information is submitted to an external device for display to the driver.

The US 2017/0328940 A1 relates to an insulation resistance measuring device including a parameter resistance connected to a negative electrode terminal of a battery, a shunt resistance connectable to the parameter resistance and a current detection circuit including an operational amplifier configured to detect and output voltage between both ends of the shunt resistance is provided. An external device is used to display diagnosis information.

The US 2008/0094034 A1 discloses a further battery condition detecting apparatus according to the state of the art.

It is thus an object of the present invention to overcome or reduce at least some of the drawbacks of the prior art and to provide a measuring arrangement that verifies a current measurement on a shunt resistor with reduced implementation costs and development efforts while reaching certain required safety levels.

### Summary of Invention

Embodiments of the present disclosure seek to solve at least one of the problems existing in the prior art to at least some extent. In particular, a battery system is provided according to claim 1 and a method of verifying an electric current measurement is provided according to claim 12. Further embodiments are defined in the corresponding dependent claims. The description and drawings also describe additional examples, aspects, implementations and non-claimed embodiments for the better understanding of the claimed subject-matter of the claims.

A first control unit may for example be a battery system manager. A second control unit may be a battery disconnect unit. The communication line may form a communication path through a physical interface between the first control unit and the second control unit. The interface may be preferably a CAN interface, wherein CAN stands for controller area network, but the invention is not restricted thereto and other interfaces may be used. Verifying the current measurement may be in other words detecting the integrity or functionality of the current measurement. Such comparing may be successful when the test pattern is consistent with the measuring signal. That may be the case when the measuring signal and test pattern signal have the same pattern. The test pattern signal may also be referred to as a test signal. A test pattern signal may include a sequence of low and high levels. Such test pattern may be characteristic, such that a comparison with the measuring signal may verify the current measurement. A comparison may detect and verify several failure modes. For example, when the shunt resistor is missing or incorrectly connected, when the amplifier does not work properly, for example no or no sufficient gain is provided or is not or incorrectly connected. In other words, the measurement path is checked by the test pattern signal.

The invention has the advantage that the second microcontroller does not have to generate the test pattern signal and also not the comparison/verification of the measuring signals with the test pattern. For these operations sufficient safety levels should be met which the second microcontroller associated to the current measurement usually does not have. Therefore, the first microcontroller of the first control unit is used for these operations. Thus, in the present invention, the second microcontroller can have a low or no safety level. Such realization is cost-efficient since it utilizes the fact that the second microcontroller used for current measurement has low or no safety level, as in battery disconnect unit, while a system relevant microcontroller of the battery system manager may have a high or higher safety level. Due to the use of the first microcontroller, a safety level of ASIL C may be reached, even when second microcontroller has no safety level but the first microcontroller has high safety level, i.e. ASIL C or ASIL D. Safety relevant tasks are therefore outsourced from the second microcontroller and therefore the problem of the bottleneck of second microcontroller is solved by usage of the first microcontroller. Further advantages are that no additional hall sensor, no magnetic disturbance is produced, no shielding is required and also one less communication line is needed.

In a preferred embodiment, the safety level of the first microcontroller is higher than the safety level of the second microcontroller. Safety level may be determined according to ASIL or ISO 26262, but the invention is not restricted thereto. Thus, safety critical tasks as for example the generation of the test pattern and the comparison of the test pattern with the measuring signal are performed by the first microcontroller with the higher safety level. Safety level is an intrinsic technical property of each microcontroller. Safety level may also be defined in terms of failure rate. A higher safety level may be in other words a lower failure rate per operations and vice versa. The first microcontroller for example may have safety level ASIL D or ASIL C. The second microcontroller may for example not have a safety level according to ASIL.

Preferably, the second control unit comprises a hardware encryption unit separately provided from the second microcontroller and electrically connected to the switch, wherein the hardware encryption unit is configured to generate an encrypted test pattern signal based on the received test pattern signal and configured to transmit the encrypted test pattern signal to the switch to control the switch according to the encrypted test pattern signal. The second microcontroller may be configured to receive the measuring signal in response to the transmitted encrypted test pattern signal through the amplifier. Thereby, a safe end-to-end connection may be implemented due to encryption. The advantage is further, that again the second microcontroller does not have to provide the encryption, since the separate hardware encryption unit independent of the second microcontroller is generating the encrypted test pattern signal.

In a preferred embodiment, the hardware encryption unit comprises shift registers configured to generate the encrypted test pattern signal. Such realization is simple and fast, wherein standard gates can be used. A hardware encryption unit may also be referred to as a hardware secure element.

Preferably, the second microcontroller is configured to generate an encrypted test pattern signal based on the received test pattern signal and configured to transmit the encrypted test pattern signal to the switch to control the switch according to the encrypted test pattern signal and the second microcontroller is configured to receive the measuring signal in response to the transmitted encrypted test pattern signal through the amplifier. This embodiment is possible since, as can be seen below, the first microcontroller is used for checking the generated test pattern signals with higher safety level and not the second microcontroller. The encryption in the second microcontroller can be done by using an encryption program comprising instructions which, when executed on the first microcontroller, cause the microcontroller to generate the encryption of the encrypted test pattern based on the generated test pattern.

In a preferred embodiment, the first microcontroller is configured to generate the encrypted test pattern signal based on the generated test pattern signal, receive the measuring signal through the communication line and compare the measuring signal with the generated encrypted test pattern signal. Thereby, the safe end-to-end connection, also referred as gray channel, is implemented. The comparison is then done for the encrypted signals. The second microcontroller is entirely excluded from the comparison. The encryption in the first microcontroller can be done by using an encryption program, comprising instructions which, when executed on the first microcontroller, cause the microcontroller to generate the encryption of the encrypted test pattern based on the generated test pattern. The encryption program may be referred to as an encryption function.

Preferably, the first microcontroller and the second microcontroller, or the first microcontroller and the hardware encryption unit, are configured to start the generation of the encrypted test pattern signal according to a synchronized clock. Thereby, an identical encrypted test pattern signal is generated. In consequence, when the comparison is performed by the first microcontroller, verification of the current measurement can be reliably performed. The encryption may be performed using conventional methods. For example, the encryption may be performed by using a pseudo random generator applied to the test pattern signal. A reset functionality may be implemented. This depends on the architecture and failure rates of the system.

In a preferred embodiment, the second microcontroller is configured to receive the test pattern signal and transmit the test pattern signal to the switch. Preferably, the second microcontroller is configured to receive the test pattern signal and transmit the test pattern signal to the hardware encryption unit. In these embodiments, the second microcontroller functions as receiver and transmitter, thus as communicator, of the test pattern signal. However, no generation of the test pattern signal and no comparison is performed by the second microcontroller, since these operations are solely performed by the first microcontroller.

In a preferred embodiment, the first microcontroller is configured to transmit the test pattern signal to the switch of the second control unit through the communication line by bypassing the second microcontroller. The advantage of this embodiment is that the test pattern signal is not even going through the second microcontroller. Thus, when no or only a low safety level is associated with the second microcontroller, bypassing the microcontroller further increases safety, since the microcontroller may not have to provide these communication steps.

In a preferred embodiment, the second control unit comprises two amplifiers each interconnected between the shunt resistor and the second microcontroller, the second microcontroller may be configured to receive two measuring signals in response to the transmitted test pattern signal through the amplifiers; the first microcontroller may be configured to receive the measuring signals through the communication line and to compare the first measuring signal and the second measuring signal with the generated test pattern signal. The two amplifiers may provide redundancy. A faulty function or defect of one of the amplifiers may be detected.

In a further aspect of the invention, an electric vehicle is disclosed comprising a battery system according to the above embodiment.

In another aspect of the invention, a method of verifying an electric current measurement of a battery system is disclosed in claim 12.

The advantage of the method corresponds to the above mentioned advantages.

In a preferred embodiment, the safety level of the first microcontroller is higher than the safety level of the second microcontroller.

Further preferred embodiments of the method can be extracted from the features of the preferred arrangement as disclosed above and in the following disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates an electric current measuring arrangement for a battery system according to a first embodiment;
- Fig. 2: illustrates an electric current measuring arrangement for a battery system according to a second embodiment;
- Fig. 3: illustrates an electric current measuring arrangement for a battery system according to a third embodiment;
- Fig. 4: illustrates an electric current measuring arrangement for a battery system according to a fourth embodiment; and
- Fig. 5: illustrates a battery system according to an embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. In the drawings, the relative sizes of elements, layers, and regions may be exaggerated for clarity.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

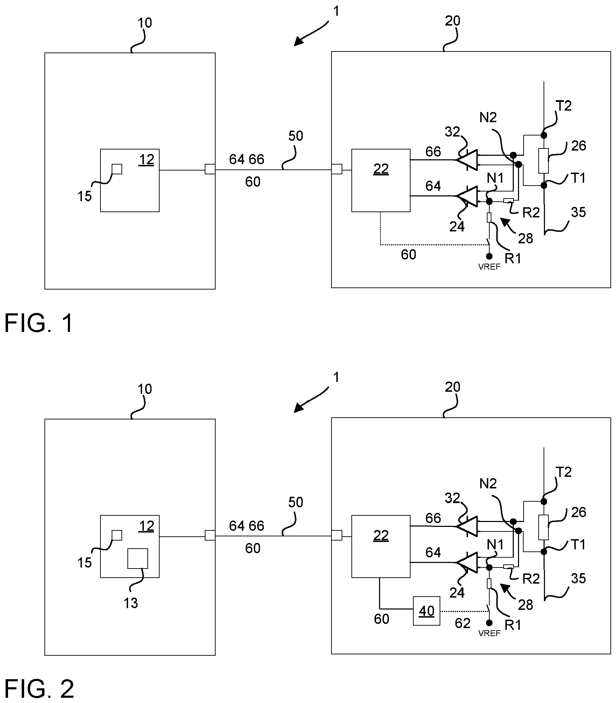

Fig. 1 shows an electric current measuring arrangement 1 for a battery system according to an embodiment of the present invention. The arrangement 1 comprises a first control unit 10 which includes a first microcontroller 12. The first control unit 10 is preferably a battery system manager, but the invention is not restricted thereto.

The second control unit 20 may comprise a second microcontroller 22. Preferably, the second control unit 20 may be a battery disconnect unit.

The first microcontroller 12 may have safety level that is higher than the safety level of the second microcontroller 22. For example, the first microcontroller 12 may have a safety level according to ASIL. A higher safety level may refer to a lower failure rate in in time and a lower safety level may refer to a higher failure rate in time per operations. The safety level is thus an intrinsic technical property of the microcontrollers 12, 22. The safety level of the first microcontroller 12 may have an ASIL C or ASIL D level. The second microcontroller 22 may not fulfill an ASIL safety level or only a low safety level.

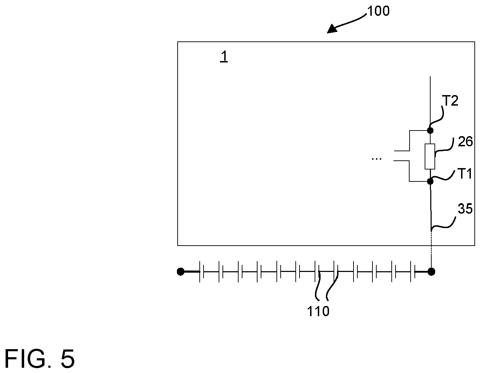

The second control unit 20 comprises a shunt resistor 26. The shunt resistor 26 is used for measuring the electric current of a battery system. The shunt resistor 26 may be connected in series with a power line 35 through which an electrical current as output or input to a plurality of battery cells flows, see also Fig. 5 for further illustration. The voltage signal across the terminals T1, T2 of the shunt resistor 26 is indicative of the electrical current for known ohmic resistance.

An amplifier 24, 32, due to the low voltage signal on the shunt resistor 26, is electrically interconnected between the second microcontroller 22 and the corresponding terminal T1, T2 of the shunt resistor 26. Input resistors may optionally be provided at each input of the amplifier 24, 32, which is not shown here. The amplifier 24, 32 amplifies the voltage signal across the terminals T1, T2 of the shunt resistor 26 which is indicative of the electrical current. The output signal of the amplifier 24, 32 is received by the second microcontroller 22. The amplifier 24, 32 may have an additional voltage supply, here not shown for reasons of brevity, for providing the gain of the voltage signal.

Further, a node N1, N2 is interconnected between one of the terminals T1, T2 of the shunt resistor 26 and the amplifier 24, 32. The node N1, N2 will be referred to below in more detail below.

In this example embodiment, two amplifiers 24, 32 are provided which are both interconnected between the second microcontroller 22 and a corresponding terminal T1, T2 of the shunt resistor 26. Thereby, redundancy may be provided which may increase safety. In other embodiments, only one amplifier, e.g. the amplifier 32, is used.

The arrangement 1 comprises further a communication line 50 communicatively connecting the first control unit 10 and the second control unit 20. The communication line 50 may be a communication path for transmitting signals across a physical interface between the fist control unit 10 and the second control unit 20. The physical interface between the control units 10, 20 may be, for example, a CAN interface. In the following, the functioning of the disclosed entities is described in more detail.

The first microcontroller 12 is configured to generate a test pattern signal 60. A test pattern signal may be, for example, a characteristic sequence of low and high signal levels in a particular order. The generated test pattern signal 60 is transmitted by the first microcontroller 12 to the second control unit 20 through the communication line 50. Since the first microcontroller 12 may have a safety level, e.g. ASIL C or D, the generation of the test pattern signal by the first microcontroller 12 may be a safe process. A storage may be provided in which the generated test pattern signal 60 is stored.

In response to receiving the test pattern signal 60, the second control unit 20 is configured to transmit the test pattern signal 60 to the node N1, N2. This transmission can be implemented in several ways, of which a preferred example is described in more detail below.

In the present example, the second microcontroller 22 is configured to receive the test pattern signal 60. The second microcontroller 22 then, in response, transmits the test pattern signal 60 to the node N1, N2. Therefore, the second microcontroller 22 acts as a communicator for the test pattern signal 60.

Here, this transmission to the node N1, N2 is performed in an exemplary way using a test pattern circuit 28. This example implementation is also used as example in the further embodiments of Figs. 2 to 4 and its explanation will not be repeated in there. The invention is not restricted to the analogue test pattern circuit 28 to transmit the test pattern signal 60 to the node N1, N2, but constitutes a simple and preferred solution that can be readily implemented.

The test pattern signal 60 may be used in this example as a control signal to output a switched voltage signal from the voltage source VREF according to the test pattern signal 60. The switched signal is consistent with the test pattern signal 60 and may be referred to as the test pattern signal 60 itself due to a mere amplitude change. The voltage VREF may be predetermined to impose a measurable offset on the nodes N1, N2.

The test pattern signal 60, or also referred as to the switched voltage signal, is then applied to the nodes N1, N2 via the resistors R1 and R2. The second resistor R2 may also be omitted. The test pattern signal 60 thus causes a voltage change on the nodes N1, N2 and thereby a measurable offset on the inputs of the amplifiers 24, 32 in accordance with the test pattern signal 60. Thus, the sequence of the test pattern signal 60 is measureable.

In response, the amplifier 24, 32 may output a measuring signal 64, 66 in response to the transmitted test pattern signal 60. The measuring signal 64, 66 is an amplified signal according to a certain gain of the amplifier 24, 32.

The second microcontroller 22 is configured to receive the measuring signal 64, 66 in response to the transmitted test pattern signal 60 through the amplifier 24, 32.

The second microcontroller 22 is configured transmit the measuring signal 64, 66 to the first microcontroller 12 through the communication line 50 and the first microcontroller 12 is configured to receive the measuring signal 64, 66 through the communication line 50 from the second microcontroller 22.

The first microcontroller 12 is further configured to compare the measuring signal 64, 66 with the generated test pattern signal 60. Since the first microcontroller 12 may have a safety level, e.g. C or D, according to ASIL, the comparison of the test pattern signal by the first microcontroller 12 may be a safe process. The comparison may be performed by a comparison function 15 of the first microcontroller as indicated in the Figure. The comparison function 15 may implemented by computer program comprising instructions, which cause the first microcontroller 12 to perform said comparison and verification.

Based on the comparison, a current measurement can be verified. In other words, the integrity or functionality of the current measurement can be tested or checked. For example, a current measurement is performed with a successive test. When the comparison is successful, the previous current measurement is thereby verified. In other words, the functionality of the current measurement is detected.

Such comparing may be successful when the generated test pattern is consistent or equal with the measuring signal. This may be the case when the measuring signal and test pattern signal have the same pattern. The test pattern signal may also be referred to as a test signal. The comparison may detect and verify several failure modes. For example, when the shunt resistor 26 is missing or incorrectly connected, short circuit to ground, whether the amplifier 24, 32 does not work properly, for example no or no sufficient gain is provided or the amplifier is not or incorrectly connected. In other words, the integrity of the measurement path is checked by comparison of the signals.

Compared to the state of the art, the second microcontroller 22 does not perform the generation of the test pattern signal 60 and also not the comparison of the measuring signals 64, 66 with the test pattern signal 60. For these functions, the first microcontroller 12 of the first control unit 10 is used. Thus, in the present invention, the second microcontroller 22 can have a low, or lower, safety level and a cost-efficient second microcontroller 22 can be used while the high, or higher, safety level can be used and the safety level of the external first microcontroller 12 is used in the present invention. Such realization is cost efficient, since usually the second microcontroller 22 has low, or lower, or even no safety level and an available microcontroller of, for example a battery system manager, with higher safety level can be used for fulfilling the safety relevant tasks of generating the test pattern signal and providing the comparisons of the signals. Safety relevant tasks of generating the test pattern and provide the comparison are outsourced from the second microcontroller 22 and therefore the problem of the bottleneck of second microcontroller 22 is solved by usage of the safety level of the first microcontroller 12 to reach a current measurement with high, e.g. ASIL C, safety level.

In the present example embodiment, the second control unit 20 may comprise two amplifiers 24, 32 interconnected between the shunt resistor 26 and the second microcontroller 22. The second microcontroller 22 may be configured to receive two measuring signals 64, 66 in response to the transmitted test pattern signal 60 through the amplifiers 24, 32. The first microcontroller 12 may be configured to receive the measuring signals 64, 66 through the communication line 50 and to compare the first measuring signal 64 and the second measuring signal 66 with the generated test pattern signal 60. Thus also multiple measurement paths may be verified. The two amplifiers 24, 32 may provide further safety in the testing due to redundancy. The resistor R2 may have the advantage that the measuring signals 64, 66 may be distinguishable by the first microcontroller 12 due to different amplitude.

Fig. 2 shows an electric current measuring arrangement 1 for a battery system according to another embodiment of the present invention. In the following, only the differences with respect to the embodiment of Fig. 1 are disclosed.

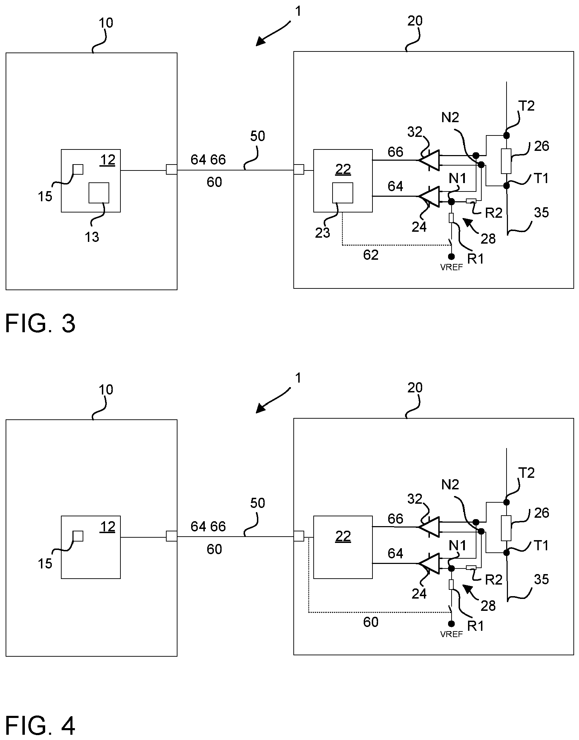

According to the present embodiment, the second control unit 20 may comprise a hardware encryption unit 40. The hardware encryption unit 40 is in this embodiment separately provided from the second microcontroller 22. The hardware encryption unit 40 may further be configured to generate an encrypted test pattern signal 62 based on the received test pattern signal 60 received from and generated by the first microcontroller 12 through the communication line 50. In the present example, but the embodiment is not restricted thereto, the second microcontroller 22 is configured to receive the test pattern signal 60 transmit the test pattern signal 60 from the second microcontroller 22 to the hardware encryption unit 40. In another embodiment, the test pattern signal 60 may be transmitted to the encryption unit 40 directly from the communication line 50 bypassing the second microcontroller 22, similar to the embodiment of Fig. 4.

The hardware encryption unit 40 may comprise shift registers configured to generate the encrypted test pattern signal 62. Such shift registers are fast in for example generating pseudo random numbers and provide rapid encryption.

The hardware encryption unit 40 may be configured to transmit the encrypted test pattern signal 62 to the node N1, N2. The transmission may be performed according to a test pattern circuit 28 as disclosed in the context of Fig. 1, but the invention is not restricted thereto. The switched voltage source VREF is then switched according to the encrypted test pattern signal 62. The second microcontroller 22 may be configured to receive the measuring signal 64, 66 in response to the transmitted encrypted test pattern signal 62 through the amplifier 24, 32.

Further, the measuring signal 64, 66 may be received by the first microcontroller 12 through the communication line 50. The first microcontroller 12 may also be configured to generate the encrypted test pattern signal based on the generated test pattern signal 60. The first microcontroller 12 may therefore comprise an encryption function 13 as indicated in Fig. 2. The encryption in the first microcontroller 12 can be done by using an encryption computer program, comprising instructions which, when executed on the first microcontroller 12, cause the microcontroller to generate the encrypted test pattern based on the generated test pattern.

The first microcontroller 12 may be configured to compare the measuring signal 64, 66 with the generated encrypted test pattern signal 62. This comparison and verification may be performed in the same manner as described in the context of Fig. 1.

The first microcontroller 12 and the hardware encryption unit 40 may be configured to start the generation of the encrypted test pattern signal 62 according to a synchronized clock. Thereby, an identical encrypted test pattern is created. For achieving this, a pseudo random number generator may therefore be used for encryption. Also, a reset functionality may be implemented.

This embodiment has the advantage that a safe end-to-end connection in comparison to the embodiment of Fig. 1 is generated due to the encryption process. Therefore, the use of the first microcontroller 12 is safely provided due to an implemented gray channel. The safe end-to-end connection is established without using the second microcontroller 22. Therefore, in this embodiment, the low or lower safety level does not lead to loss of safety even when encryption is additionally done.

Fig. 3 shows an electric current measuring arrangement 1 for a battery system according to another embodiment of the present invention. In the following, only the differences with respect to Fig. 2 are described and for the remaining features it is referred to Fig. 1 and Fig. 2 and the description thereto.

Compared with Fig. 2, the second microcontroller 22 itself is configured to generate an encrypted test pattern signal 62 based on the received test pattern signal 60. The second microcontroller 22 may thus comprise an encryption function 23 as indicated in Fig. 3. The encryption by the second microcontroller 22 can be done by using an encryption program, comprising instructions which, when executed on the second microcontroller 22, cause the microcontroller to generate the encryption of the encrypted test pattern based on the received test pattern 60.

Such encryption can be done by the second microcontroller 22. The reason for this is that the comparison/check or verification of the signals is still performed with a high, or higher, safety level of the first microcontroller 12. Thus, this embodiment uses the fact that the first microcontroller 12 may have a high safety level to perform the operations of test pattern generation and comparing.

The second microcontroller 22 may be configured to transmit the encrypted test pattern signal 62 to the node N1, N2. Thus, an additional hardware encryption unit is not required according to the present embodiment. In accordance with embodiment of Fig. 2, the second microcontroller 22 may be configured to receive the measuring signal 64, 66 in response to the transmitted encrypted test pattern signal 62 through the amplifier 24, 32. As described in the context of Fig. 2, the first microcontroller 12 may be configured to generate the encrypted test pattern signal based on the generated test pattern signal 60. The first microcontroller 12 may therefore comprise an encryption function 13 as indicated in Fig. 2. The measuring signal 64, 66 may be received through the communication line 50. The first microcontroller 12 may be configured to compare the measuring signal 64, 66 with the generated encrypted test pattern signal 62.

Also in this case, the first microcontroller 12 and the second microcontroller 22 may be configured to start the generation of the encrypted test pattern signal 62 according to a synchronized clock. Pseudo random number generators may therefore be used for encryption to then reach an identical encrypted signal.

The present embodiment may only use the second microcontroller as encryption unit, since the tasks of generating the test pattern signal and the comparing and verification performed by the first microcontroller 12, which may have a high or higher safety level.

Fig. 4 shows an electric current measuring arrangement 1 for a battery system according to another embodiment of the present invention. In the following, only the differences with respect to Fig. 1 are disclosed and for further features it is referred to the description of the Figure 1. In this embodiment, the first microcontroller 12 is configured to transmit the test pattern signal 60 to the node N1, N2 of the second control unit 20 through the communication line 50 and by bypassing the second microcontroller 22. Therefore, the second microcontroller 22 is not used as communicator, namely to receive the test pattern signal 60 and transmit the test pattern signal to the node N1, N2. Thus, a further safety relevant operational task for the weak second microcontroller 22 may be outsourced from the second microcontroller 22 since the test pattern signal 60 is not going through the second microcontroller 22 using only the communication lines.

Fig. 5 shows a battery system 100 according to an embodiment of the present invention. The battery system comprises an electric current measuring arrangement 1 according to one of the embodiments as disclosed above. The battery system 100 comprises further a plurality of interconnected battery cells 110. The shunt resistor 26 is shown in accordance with Figs. 1 to 4 and is electrically connected to an output terminal of the plurality of battery cells 110.

### Reference signs

- 1: electric current measuring arrangement
- 10: first control unit
- 12: first microcontroller
- 13: encryption function
- 15: comparing function

- 20: second control unit
- 22: second microcontroller
- 23: encryption function
- 24: amplifier
- 26: shunt resistor
- 28: test pattern circuit
- 32: amplifier

- 40: hardware encryption unit

- 50: communication line

- 60: test pattern signal
- 62: encrypted test pattern signal
- 64: measuring signal
- 66: measuring signal

- N1: node
- N2: node
- R1: resistor
- R2: resistor
- T1: terminal
- T2: terminal

- 100: battery system
- 110: battery cell

## Claims

1. Battery system (100), comprising:
- a plurality of interconnected battery cells (110);
- a shunt resistor (26) electrically connected to an output terminal of the plurality of the battery cells (110);
- a first control unit (10) comprising a first microcontroller (12);
- a second control unit (20) comprising:
a second microcontroller (22);
an amplifier (24, 32) electrically interconnected between the terminals (T1, T2) of the shunt resistor (26) and the second microcontroller (22), wherein the amplifier is configured to amplify the voltage signal across the terminals (T1, T2) of the shunt resistor (26), which is indicative of an electrical current through the shunt resistor (26);
a node (N1, N2) interconnected between one of the terminals (T1, T2) of the shunt resistor (26) and the amplifier (24, 32);
a switch controllable to electrically connect a voltage (Vref) to the node (N1, N2);
- a communication line (50) communicatively connecting the first control unit (10) and the second control unit (20);
wherein the first microcontroller (12) is configured to generate a test pattern signal (60) including a sequence of low and high levels and transmit the test pattern signal (60) to the second control unit (20) through the communication line (50); wherein the second control unit (20) is configured to transmit the test pattern signal (60) to the switch to control the switch according to the test pattern signal; wherein the second microcontroller (22) is configured to receive a measuring signal (64, 66) output by the amplifier (24, 32) in response to the transmitted test pattern signal (60), wherein the measuring signal (64, 66) is an amplified signal according to a certain gain of the amplifier (24, 32);
wherein the first microcontroller (12) is configured to receive the measuring signal (64, 66) through the communication line (50) from the second microcontroller (22), compare the measuring signal (64, 66) with the generated test pattern signal (60) and verify a current measurement, obtained by the amplifier (24, 32), based on the comparison, wherein verify the current measurement corresponds to detect the integrity or functionality of the current measurement such that the comparison determines whether or not the test pattern (60) is consistent or equal with the measuring signal (64, 66) and determines a successful comparison when the measuring signal (64, 66) and the test pattern (60) have the same pattern.

2. The battery system (100) of claim 1, wherein the failure rate per operations of the first microcontroller (12) is lower than the failure rate per operations of the second microcontroller (22).

3. The battery system (100) of one of the claims 1 to 2, wherein the second control unit (20) comprises a hardware encryption unit (40) separately provided from the second microcontroller (22) and electrically connected to the switch, wherein the hardware encryption unit (40) is configured to generate an encrypted test pattern signal (62) based on the received test pattern signal (60) and configured to transmit the encrypted test pattern signal (62) to the switch to control the switch according to the encrypted test pattern signal, and the second microcontroller (22) is configured to receive the measuring signal (64, 66) in response to the transmitted encrypted test pattern signal (62) through the amplifier (24, 32),
wherein the first microcontroller (12) is configured to generate the encrypted test pattern signal (62) based on the generated test pattern signal (60), receive the measuring signal (64, 66) through the communication line (50) and compare the measuring signal (64, 66) with the generated encrypted test pattern signal (62).

4. The battery system (100) of claim 3, wherein the hardware encryption unit (40) comprises shift registers configured to generate the encrypted test pattern signal (62).

5. The battery system (100) of one of the claims 1 to 2, wherein the second microcontroller (22) is configured to generate an encrypted test pattern signal (62) based on the received test pattern signal (60) and configured to transmit the encrypted test pattern signal (62) to the switch to control the switch according to the encrypted test pattern signal, and the second microcontroller (22) is configured to receive the measuring signal (64, 66) in response to the transmitted encrypted test pattern signal (62) through the amplifier (24, 32), wherein the first microcontroller (12) is configured to generate the encrypted test pattern signal (62) based on the generated test pattern signal (60), receive the measuring signal (64, 66) through the communication line (50) and compare the measuring signal (64, 66) with the generated encrypted test pattern signal (62).

6. The battery system (100) of one of the claims 3 to 5, wherein the first microcontroller (12) and the second microcontroller (22), or the first microcontroller (12) and the hardware encryption unit (40), are configured to start the generation of the encrypted test pattern signal (62) according to a synchronized clock.

7. The battery system (100) of one of the claims 1 to 2, wherein the second microcontroller (22) is configured to receive the test pattern signal (60) and transmit the test pattern signal to the switch

8. The battery system (100)of claim 3, wherein the second microcontroller (22) is configured to receive the test pattern signal (60) and transmit the test pattern signal (60) to the hardware encryption unit (40).

9. The battery system (100) of one of the claims 1 to 2, wherein the first microcontroller (12) is configured to transmit the test pattern signal (60) to the switch of the second control unit (20) through the communication line (50) bypassing the second microcontroller (22).

10. The battery system (100) of one of the claims 1 to 9, wherein the second control unit (20) comprises two amplifiers (24, 32) interconnected between the shunt resistor (26) and the second microcontroller (22), the second microcontroller (22) is configured to receive two measuring signals (64, 66) in response to the transmitted test pattern signal (60) through the amplifiers; the first microcontroller (12) is configured to receive the measuring signals (64, 66) through the communication line (50) and to compare the first measuring signal (64) and the second measuring signal (66) with the generated test pattern signal (60).

11. Electric vehicle, comprising a battery system (100) according to one of the claims 1 to 10.

12. Method of verifying an electric current measurement of a battery system of claims 1 to 10, comprising:
- generating, by the first microcontroller (12), a test pattern signal (60);
- transmitting, by the first microcontroller (12), the test pattern signal (60) to the second control unit (20) through the communication line (50);
- transmitting the test pattern signal (60) to the switch to control the switch according to the test pattern signal;
- receiving, by the second microcontroller (22), a measuring signal (64, 66) output by the amplifier (24, 32) in response to the transmitted test pattern signal (60), wherein the measuring signal (64, 66) is an amplified signal according to a certain gain of the amplifier (24, 32), and wherein the amplifier is configured to amplify the voltage signal across the terminals (T1, T2) of the shunt resistor (26), which is indicative of an electrical current through the shunt resistor (26);
- receiving, by the first microcontroller (12), the measuring signal (64, 66) through the communication line (50) from the second microcontroller (22); and
- comparing, by the first microcontroller (12), the measuring signal (64, 66) with the generated test pattern signal (60) to verify a current measurement, obtained by the amplifier (24, 32), based on the comparison, wherein verify the current measurement corresponds to detect the integrity or functionality of the current measurement such that the comparison determines whether or not the test pattern (60) is consistent or equal with the measuring signal (64, 66) and determines a successful comparison when the measuring signal (64, 66) and the test pattern (60) have the same pattern.

13. The method of claim 12, wherein the failure rate per operations of the first microcontroller (12) is lower than the failure rate per operations of the second microcontroller (22).

## Patentansprüche

1. Batteriesystem (100), umfassend:
- eine Vielzahl miteinander verbundener Batteriezellen (110);
- einen Shunt-Widerstand (26), der elektrisch mit einem Ausgangsanschluss der Vielzahl der Batteriezellen (110) verbunden ist;
- eine erste Steuereinheit (10), die einen ersten Mikrocontroller (12) aufweist;
- eine zweite Steuereinheit (20), die Folgendes umfasst:
einen zweiten Mikrocontroller (22);
einen Verstärker (24, 32), der elektrisch zwischen die Anschlüsse (T1, T2) des Shunt-Widerstands (26) und den zweiten Mikrocontroller (22) geschaltet ist, wobei der Verstärker konfiguriert ist, um das Spannungssignal an den Anschlüssen (T1, T2) des Shunt-Widerstands (26) zu verstärken, das einen elektrischen Strom durch den Shunt-Widerstand (26) anzeigt;
einen Knoten (N1, N2), der zwischen einen der Anschlüsse (T1, T2) des Shunt-Widerstands (26) und den Verstärker (24, 32) geschaltet ist;
einen Schalter, der so gesteuert werden kann, dass er eine Spannung (Vref) mit dem Knoten (N1, N2) verbindet;
- eine Kommunikationsleitung (50), die die erste Steuereinheit (10) und die zweite Steuereinheit (20) kommunizierend verbindet;
wobei der erste Mikrocontroller (12) konfiguriert ist, um ein Testmustersignal (60) zu erzeugen, das eine Folge von niedrigen und hohen Pegeln enthält, und das Testmustersignal (60) über die Kommunikationsleitung (50) an die zweite Steuereinheit (20) zu übertragen;
wobei die zweite Steuereinheit (20) konfiguriert ist, um das Testmustersignal (60) an den Schalter zu übertragen, um den Schalter gemäß dem Testmustersignal zu steuern;
wobei der zweite Mikrocontroller (22) konfiguriert ist, um ein Messsignal (64, 66) zu empfangen, das von dem Verstärker (24, 32) in Reaktion auf das übertragene Testmustersignal (60) ausgegeben wird, wobei das Messsignal (64, 66) ein verstärktes Signal gemäß einer bestimmten Verstärkung des Verstärkers (24, 32) ist;
wobei der erste Mikrocontroller (12) konfiguriert ist, um das Messsignal (64, 66) über die Kommunikationsleitung (50) von dem zweiten Mikrocontroller (22) zu empfangen, das Messsignal (64, 66) mit dem erzeugten Testmustersignal (60) zu vergleichen und eine Strommessung, die von dem Verstärker (24, 32) erhalten wird, basierend auf dem Vergleich zu verifizieren, wobei das Verifizieren der Strommessung dem Erfassen der Integrität oder Funktionalität der Strommessung entspricht, so dass der Vergleich bestimmt, ob das Testmuster (60) mit dem Messsignal (64, 66) konsistent oder gleich ist oder nicht, und einen erfolgreichen Vergleich bestimmt, wenn das Messsignal (64, 66) und das Testmuster (60) das gleiche Muster haben.

2. Batteriesystem (100) nach Anspruch 1, wobei die Fehlerrate pro Operation des ersten Mikrocontrollers (12) geringer ist als die Fehlerrate pro Operation des zweiten Mikrocontrollers (22).

3. Batteriesystem (100) nach einem der Ansprüche 1 bis 2, wobei die zweite Steuereinheit (20) eine Hardware-Verschlüsselungseinheit (40) umfasst, die getrennt von dem zweiten Mikrocontroller (22) vorgesehen und elektrisch mit dem Schalter verbunden ist, wobei die Hardware-Verschlüsselungseinheit (40) konfiguriert ist, um ein verschlüsseltes Testmustersignal (62) auf der Grundlage des empfangenen Testmustersignals (60) zu erzeugen, und konfiguriert ist, um das verschlüsselte Testmustersignal (62) an den Schalter zu übertragen, um den Schalter gemäß dem verschlüsselten Testmustersignal zu steuern, und der zweite Mikrocontroller (22) konfiguriert ist, um das Messsignal (64, 66) als Reaktion auf das übertragene verschlüsselte Testmustersignal (62) über den Verstärker (24, 32) zu empfangen, wobei der erste Mikrocontroller (12) konfiguriert ist, um das verschlüsselte Testmustersignal (62) basierend auf dem erzeugten Testmustersignal (60) zu erzeugen, das Messsignal (64, 66) über die Kommunikationsleitung (50) zu empfangen und das Messsignal (64, 66) mit dem erzeugten verschlüsselten Testmustersignal (62) zu vergleichen.

4. Batteriesystem (100) nach Anspruch 3, wobei die Hardware-Verschlüsselungseinheit (40) Schieberegister umfasst, die konfiguriert sind, um das verschlüsselte Testmustersignal (62) zu erzeugen.

5. Batteriesystem (100) nach einem der Ansprüche 1 bis 2, wobei der zweite Mikrocontroller (22) konfiguriert ist, um ein verschlüsseltes Testmustersignal (62) auf der Grundlage des empfangenen Testmustersignals (60) zu erzeugen, und konfiguriert ist, um das verschlüsselte Testmustersignal (62) an den Schalter zu übertragen, um den Schalter gemäß dem verschlüsselten Testmustersignal zu steuern, und der zweite Mikrocontroller (22) konfiguriert ist, um das Messsignal (64, 66) in Reaktion auf das übertragene verschlüsselte Testmustersignal (62) über den Verstärker (24, 32) zu empfangen, wobei der erste Mikrocontroller (12) so konfiguriert ist, dass er das verschlüsselte Testmustersignal (62) auf der Grundlage des erzeugten Testmustersignals (60) erzeugt, das Messsignal (64, 66) über die Kommunikationsleitung (50) empfängt und das Messsignal (64, 66) mit dem erzeugten verschlüsselten Testmustersignal (62) vergleicht.

6. Batteriesystem (100) nach einem der Ansprüche 3 bis 5, wobei der erste Mikrocontroller (12) und der zweite Mikrocontroller (22) oder der erste Mikrocontroller (12) und die Hardware-Verschlüsselungseinheit (40) so konfiguriert sind, dass sie die Erzeugung des verschlüsselten Testmustersignals (62) gemäß einem synchronisierten Takt starten.

7. Batteriesystem (100) nach einem der Ansprüche 1 bis 2, wobei der zweite Mikrocontroller (22) konfiguriert ist, um das Testmustersignal (60) zu empfangen und das Testmustersignal an den Schalter zu senden

8. Batteriesystem (100) nach Anspruch 3, wobei der zweite Mikrocontroller (22) konfiguriert ist, um das Testmustersignal (60) zu empfangen und das Testmustersignal (60) an die Hardware-Verschlüsselungseinheit (40) zu senden.

9. Batteriesystem (100) nach einem der Ansprüche 1 bis 2, wobei der erste Mikrocontroller (12) so konfiguriert ist, dass er das Testmustersignal (60) über die Kommunikationsleitung (50) unter Umgehung des zweiten Mikrocontrollers (22) an den Schalter der zweiten Steuereinheit (20) überträgt.

10. Batteriesystem (100) nach einem der Ansprüche 1 bis 9, wobei die zweite Steuereinheit (20) zwei Verstärker (24, 32) umfasst, die zwischen den Shunt-Widerstand (26) und den zweiten Mikrocontroller (22) geschaltet sind, wobei der zweite Mikrocontroller (22) konfiguriert ist, um zwei Messsignale (64, 66) in Reaktion auf das übertragene Testmustersignal (60) über die Verstärker zu empfangen; der erste Mikrocontroller (12) konfiguriert ist, um die Messsignale (64, 66) über die Kommunikationsleitung (50) zu empfangen und das erste Messsignal (64) und das zweite Messsignal (66) mit dem erzeugten Testmustersignal (60) zu vergleichen.

11. Elektrisches Fahrzeug, das ein Batteriesystem (100) nach einem der Ansprüche 1 bis 10 umfasst.

12. Verfahren zur Verifizierung einer elektrischen Strommessung eines Batteriesystems nach einem der Ansprüche 1 bis 10, umfassend:
- Erzeugen eines Testmustersignals (60) durch den ersten Mikrocontroller (12);
- Übertragen des Testmustersignals (60) durch den ersten Mikrocontroller (12) an die zweite Steuereinheit (20) über die Kommunikationsleitung (50);
- Übertragen des Testmustersignals (60) an den Schalter, um den Schalter entsprechend dem Testmustersignal zu steuern;
- Empfangen eines Messsignals (64, 66), das von dem Verstärker (24, 32) in Reaktion auf das übertragene Testmustersignal (60) ausgegeben wird, durch den zweiten Mikrocontroller (22), wobei das Messsignal (64, 66) ein verstärktes Signal gemäß einer bestimmten Verstärkung des Verstärkers (24, 32) ist; und wobei der Verstärker konfiguriert ist, um das Spannungssignal über den Anschlüssen (T1, T2) des Shunt-Widerstands (26) zu verstärken, das einen elektrischen Strom durch den Shunt-Widerstand (26) anzeigt;
- Empfangen des Messsignals (64, 66) durch den ersten Mikrocontroller (12) über die Kommunikationsleitung (50) von dem zweiten Mikrocontroller (22); und
- Vergleichen des Messsignals (64, 66) mit dem erzeugten Testmustersignal (60) durch den ersten Mikrocontroller (12), um eine durch den Verstärker (24, 32) erhaltene Strommessung auf der Grundlage des Vergleichs zu verifizieren, wobei das Verifizieren der Strommessung dem Erfassen der Integrität oder Funktionalität der Strommessung entspricht, so dass der Vergleich bestimmt, ob das Testmuster (60) mit dem Messsignal (64, 66) konsistent oder gleich ist oder nicht, und einen erfolgreichen Vergleich bestimmt, wenn das Messsignal (64, 66) und das Testmuster (60) das gleiche Muster haben.

13. Verfahren nach Anspruch 12, wobei die Fehlerrate pro Operation des ersten Mikrocontrollers (12) geringer ist als die Fehlerrate pro Operation des zweiten Mikrocontrollers (22).

## Revendications

1. Système de batterie (100), comprenant :
- une pluralité d'éléments de batterie (110) interconnectés ;
- une résistance de dérivation (26) électriquement connectée à une borne de sortie de la pluralité des éléments de batterie (110) ;
- une première unité de commande (10) comprenant un premier microcontrôleur (12) ;
- une deuxième unité de commande (20) comprenant :
un deuxième microcontrôleur (22) ;
un amplificateur (24, 32) électriquement interconnecté entre les bornes (T1, T2) de la résistance de dérivation (26) et le deuxième microcontrôleur (22), dans lequel l'amplificateur est configuré pour amplifier le signal de tension aux bornes (T1, T2) de la résistance de dérivation (26), qui est indicatif d'un courant électrique à travers la résistance de dérivation (26) ;
un noeud (N1, N2) interconnecté entre l'une des bornes (T1, T2) de la résistance de dérivation (26) et l'amplificateur (24, 32) ;
un commutateur apte à être commandé pour connecter électriquement une tension (Vref) au noeud (N1, N2) ;
- une ligne de communication (50) connectant en communication la première unité de commande (10) et la deuxième unité de commande (20) ;
dans lequel le premier microcontrôleur (12) est configuré pour générer un signal de motif de test (60) comportant une séquence de niveaux bas et haut et émettre le signal de motif de test (60) vers la deuxième unité de commande (20) par le biais de la ligne de communication (50) ;
dans lequel la deuxième unité de commande (20) est configurée pour émettre le signal de motif de test (60) vers le commutateur pour commander le commutateur selon le signal de motif de test ;
dans lequel le deuxième microcontrôleur (22) est configuré pour recevoir un signal de mesure (64, 66) délivré en sortie par l'amplificateur (24, 32) en réponse au signal de motif de test (60) émis, dans lequel le signal de mesure (64, 66) est un signal amplifié selon un certain gain de l'amplificateur (24, 32) ;
dans lequel le premier microcontrôleur (12) est configuré pour recevoir le signal de mesure (64, 66) par le biais de la ligne de communication (50) en provenance du deuxième microcontrôleur (22), comparer le signal de mesure (64, 66) avec le signal de motif de test (60) généré et vérifier une mesure de courant, obtenue par l'amplificateur (24, 32), sur la base de la comparaison, dans lequel vérifier la mesure de courant correspond à détecter l'intégrité ou la fonctionnalité de la mesure de courant de sorte que la comparaison détermine si le motif de test (60) est cohérent avec ou égal au signal de mesure (64, 66) ou non et détermine une comparaison réussie lorsque le signal de mesure (64, 66) et le motif de test (60) possèdent le même motif.

2. Système de batterie (100) selon la revendication 1, dans lequel le taux d'échec par opérations du premier microcontrôleur (12) est inférieur au taux d'échec par opérations du deuxième microcontrôleur (22).

3. Système de batterie (100) selon l'une des revendications 1 à 2, dans lequel la deuxième unité de commande (20) comprend une unité de chiffrement matériel (40) prévue séparément du deuxième microcontrôleur (22) et électriquement connectée au commutateur, dans lequel l'unité de chiffrement matériel (40) est configurée pour générer un signal de motif de test chiffré (62) sur la base du signal de motif de test (60) reçu et configurée pour émettre le signal de motif de test chiffré (62) vers le commutateur pour commander le commutateur selon le signal de motif de test chiffré, et le deuxième microcontrôleur (22) est configuré pour recevoir le signal de mesure (64, 66) en réponse au signal de motif de test chiffré (62) émis par le biais de l'amplificateur (24, 32),
dans lequel le premier microcontrôleur (12) est configuré pour générer le signal de motif de test chiffré (62) sur la base du signal de motif de test (60) généré, recevoir le signal de mesure (64, 66) par le biais de la ligne de communication (50) et comparer le signal de mesure (64, 66) avec le signal de motif de test chiffré (62) généré.

4. Système de batterie (100) selon la revendication 3, dans lequel l'unité de chiffrement matériel (40) comprend des registres à décalage configurés pour générer le signal de motif de test chiffré (62).

5. Système de batterie (100) selon l'une des revendications 1 à 2, dans lequel le deuxième microcontrôleur (22) est configuré pour générer un signal de motif de test chiffré (62) sur la base du signal de motif de test (60) reçu et configuré pour émettre le signal de motif de test chiffré (62) vers le commutateur pour commander le commutateur selon le signal de motif de test chiffré, et le deuxième microcontrôleur (22) est configuré pour recevoir le signal de mesure (64, 66) en réponse au signal de motif de test chiffré (62) émis par le biais de l'amplificateur (24, 32), dans lequel le premier microcontrôleur (12) est configuré pour générer le signal de motif de test chiffré (62) sur la base du signal de motif de test (60) généré, recevoir le signal de mesure (64, 66) par le biais de la ligne de communication (50) et comparer le signal de mesure (64, 66) avec le signal de motif de test chiffré (62) généré.

6. Système de batterie (100) selon l'une des revendications 3 à 5, dans lequel le premier microcontrôleur (12) et le deuxième microcontrôleur (22), ou le premier microcontrôleur (12) et l'unité de chiffrement matériel (40), sont configurés pour débuter la génération du signal de motif de test chiffré (62) selon une horloge synchronisée.

7. Système de batterie (100) selon l'une des revendications 1 à 2, dans lequel le deuxième microcontrôleur (22) est configuré pour recevoir le signal de motif de test (60) et émettre le signal de motif de test vers le commutateur

8. Système de batterie (100) selon la revendication 3, dans lequel le deuxième microcontrôleur (22) est configuré pour recevoir le signal de motif de test (60) et émettre le signal de motif de test (60) vers l'unité de chiffrement matériel (40).

9. Système de batterie (100) selon l'une des revendications 1 à 2, dans lequel le premier microcontrôleur (12) est configuré pour émettre le signal de motif de test (60) vers le commutateur de la deuxième unité de commande (20) par le biais de la ligne de communication (50) en court-circuitant le deuxième microcontrôleur (22).

10. Système de batterie (100) selon l'une des revendications 1 à 9, dans lequel la deuxième unité de commande (20) comprend deux amplificateurs (24, 32) interconnectés entre la résistance de dérivation (26) et le deuxième microcontrôleur (22), le deuxième microcontrôleur (22) est configuré pour recevoir deux signaux de mesure (64, 66) en réponse au signal de motif de test (60) émis par le biais des amplificateurs ; le premier microcontrôleur (12) est configuré pour recevoir les signaux de mesure (64, 66) par le biais de la ligne de communication (50) et pour comparer le premier signal de mesure (64) et le deuxième signal de mesure (66) avec le signal de motif de test (60) généré.

11. Véhicule électrique, comprenant un système de batterie (100) selon l'une des revendications 1 à 10.

12. Procédé de vérification d'une mesure de courant électrique d'un système de batterie selon les revendications 1 à 10, comprenant :
- la génération, par le premier microcontrôleur (12), d'un signal de motif de test (60) ;
- l'émission, par le premier microcontrôleur (12), du signal de motif de test (60) vers la deuxième unité de commande (20) par le biais de la ligne de communication (50) ;
- l'émission du signal de motif de test (60) vers le commutateur pour commander le commutateur selon le signal de motif de test ;
- la réception, par le deuxième microcontrôleur (22), d'un signal de mesure (64, 66) délivré en sortie par l'amplificateur (24, 32) en réponse au signal de motif de test (60) émis, dans lequel le signal de mesure (64, 66) est un signal amplifié selon un certain gain de l'amplificateur (24, 32), et dans lequel l'amplificateur est configuré pour amplifier le signal de tension aux bornes (T1, T2) de la résistance de dérivation (26), qui est indicatif d'un courant électrique à travers la résistance de dérivation (26) ;
- la réception, par le premier microcontrôleur (12), du signal de mesure (64, 66) par le biais de la ligne de communication (50) du deuxième microcontrôleur (22) ; et
- la comparaison, par le premier microcontrôleur (12), du signal de mesure (64, 66) avec le signal de motif de test (60) généré pour vérifier une mesure de courant, obtenue par l'amplificateur (24, 32), sur la base de la comparaison, dans lequel vérifier la mesure de courant correspond à détecter l'intégrité ou la fonctionnalité de la mesure de courant de sorte que la comparaison détermine si le motif de test (60) est cohérent avec ou égal au signal de mesure (64, 66) ou non et détermine une comparaison réussie lorsque le signal de mesure (64, 66) et le motif de test (60) possèdent le même motif.

13. Procédé selon la revendication 12, dans lequel le taux d'échec par opérations du premier microcontrôleur (12) est inférieur au taux d'échec par opérations du deuxième microcontrôleur (22).
